(19) Europäisches Patentamt
European Patent Office
Office européen des brevets

(11) **EP 3 885 991 A1**

(12) **EUROPEAN PATENT APPLICATION**

(43) Date of publication:
**29.09.2021 Bulletin 2021/39**

(51) Int Cl.:
***G06K 9/46*** (2006.01)   ***G06K 9/62*** (2006.01)

(21) Application number: **20315061.0**

(22) Date of filing: **26.03.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **ANOTHER BRAIN**
**75009 Paris (FR)**

(72) Inventors:
- **Pinto, Guillaume**
  **75009 Paris (FR)**
- **Lopez, Nicolas**
  **75009 Paris (FR)**
- **Meyre, Arthur**
  **75009 Paris (FR)**

(74) Representative: **Marks & Clerk France**
**Immeuble "Visium"**
**22, avenue Aristide Briand**
**94117 Arcueil Cedex (FR)**

(54) **AUTOENCODER-BASED SEGMENTATION MASK GENERATION IN AN ALPHA CHANNEL**

(57) The invention discloses a device that is able to generate a segmentation mask for an object in a digital image. To do so, the device comprises a processing logic that is configured to use a previously trained auto-encoder to encode the image, and decode the image generating an additional alpha channel, which defines the segmentation mask.

```
┌──────────────────────────┐
│  Obtaining digital images, │ ─── 510
│    and reference masks     │
└──────────────────────────┘
              │
              ▼
┌──────────────────────────┐
│   Training autoencoder to  │ ─── 520
│   minimize loss function   │
└──────────────────────────┘
```

500

**FIG.5**

EP 3 885 991 A1

**Description**

FIELD OF THE INVENTION

The present invention relates to the field of generation of segmentation masks of objects in digital images. More specifically, it relates to the generation of segmentation masks in images that may represent either normal objects or objects that comprise defects.

BACKGROUND PRIOR ART

Digital images are nowadays the basis of a growing number of applications. They may be captured from a wide number of sources, and represent a variety of things, such as landscapes, objects or persons. When an object is represented on an image behind a background, it is for a number of applications useful to separate the object from the background, in order to perform image analysis only on the object, without being affected by the background. This is for example the case in applications relative to quality control in the industry, wherein the presence or absence of defects in an object, as well as the characterization and localization of defects is performed automatically based on images of the object. In such cases, the detection of defects is much more efficient if the object is first separated from the background, so that the detection is performed only on the object, without being affected by the content of the background. The separation between the object and the background is usually done by defining a segmentation mask. A segmentation mask is a mask which indicates, in the image, the pixels that belong to the targeted object, and the pixels that do not belong to this object (for example, background pixels).

In general, the automatic segmentation is performed by training a supervised machine learning engine to generate segmentation masks for a type of objects using a training set that comprises of objects of this type, and the corresponding mask. At the end of the training phase, the supervised machine learning engine must be able to automatically generate segmentation masks for this kind of objects, from a new image, that is to say, when an unknown image is provided, separate the object of the target type from the background of the image. A general challenge for the automatic generation of segmentation masks therefore consists in properly separating an object from a given type from the background of the image. This may however be a difficult task for a number of reasons. First of all, objects of the same type may be captured under different conditions (light, orientation, zoom...), and therefore be displayed on the image under different sizes, shapes or colors. A varying background may also make the segmentation difficult.

These challenges are addressed by prior art in different ways. A first method consists in capturing images of the objects in a situation which is controlled in details. For example, the images of the objects can be captured when the object is lying in a black box with a defined light, so that the background is defined by the black pixels. If this solution allows an efficient separation between the object and the background, it is costly, difficult to manage, and requires lots of space. It is therefore not adapted for industrial applications that require a quick analysis of a large number of products, such as the detection of defects in a production line.

In general, the classical algorithms to generate segmentation masks, such as those disclosed by McLachlan, G. J., & Basford, K. E. (1988). Mixture models: Inference and applications to clustering (Vol. 38). New York: M. Dekker consist in classifying each pixel either as a foreground or a background pixel. One of the most popular solutions for this kind of *algorithm* is the solution called "Grabcut" and disclosed by Rother, C., Kolmogorov, V., & Blake, A. (2004). "GrabCut" interactive foreground extraction using iterated graph cuts. ACM transactions on graphics (TOG), 23(3), 309-314. However, these algorithms are hardly able to recognize complex backgrounds, and perform well only if the background is very different from the object to segment. In addition, the segmentation solution often needs to be refined by an expert, whose intervention is long and costly.

Another option consists in identifying transformation of known shapes, by assuming that the transformations are only due to a difference of angle of view or zoom of the camera. This kind of solutions, called "SIFT" (Scale Invariant Features Transform), is for example described by Lowe, D. G. (1999, September). Object recognition from local scale-invariant features. In Proceedings of the seventh IEEE international conference on computer vision (Vol. 2, pp. 1150-1157). Ieee. These methods are however not able to properly segment the objects in case of changes of lighting, or variations/deformations of the objects to detect.

Other methods rely on unsupervised deep learning to segment a scene. This is for example the case of *"Attend Infer Repeat"* (AIR), disclosed by Eslami, S. A., Heess, N., Weber, T., Tassa, Y., Szepesvari, D., & Hinton, G. E. (2016). Attend, infer, repeat: Fast scene understanding with generative models. In Advances in Neural Information Processing Systems (pp. 3225-3233), or "MONet" disclosed by Burgess, C. P., Matthey, L., Watters, N., Kabra, R., Higgins, I., Botvinick, M., & Lerchner, A. (2019). Monet: Unsupervised scene decomposition and representation. arXiv preprint arXiv:1901.11390. These methods however present the drawbacks of being very long to train, and have a very limited capacity to detect objects that are different from objects of a training set, for example abnormal objects of a line of production.

Yet other solutions of instance segmentation rely on supervised deep learning. The best known are "*Mask R-CNN*" disclosed by He, K., Gkioxari, G., Dollár, P., & Girshick, R. (2017). Mask r-cnn. In Proceedings of the IEEE international conference on computer vision (pp. 2961-2969), and "*Yolact*", disclosed by Bolya, D., Zhou, C., Xiao, F., & Lee, Y. J. (2019). YOLACT: real-time instance segmentation. In Proceedings of the IEEE International Conference on Computer Vision (pp. 9157-9166). These solutions provide the advantages of being robust to any kind of background, partial occlusion and deformation of objects. These properties are essential for being able to segment instances of an object type in various circumstances.

However, as each of these solutions are trained to extract the pixels that are deemed to belong to instances of a defined class of objects, they have the drawback, when facing an image of an instance of the class that present defects, of naturally excluding some or all the pixels corresponding to the defect from the segmentation mask. This drawback is very detrimental, for applications like industrial control quality whose purpose is to detect these defects from the segmentation mask, since most pixels that contain the defect will not be provided to the anomaly detection. Even if the training sets may be enriched with defective instances of a class of objects, the prior art solutions will, in the best situations, be able to properly segment only the instances that are affected by defects that have already be encountered. This represents a significant drawback, because new defects may appear in industrial productions, and modifications in a product or production line may result in new, currently unknown defects to occur. Prior art methods will riot be able to properly segment instances of classes that are affected by such previously unknown defects.

There is therefore the need of a device, method or computer program that is able to perform an automatic segmentation of instances of a class in digital images, that is robust to variations of the background and conditions of capture, and are able to properly generate segmentation masks even for instances of the class that are affected by defects that were not present in any sample of the training set that was used to train the automatic segmentation.

SUMMARY OF THE INVENTION

To this effect, the invention discloses a computer-implemented method for training at least one autoencoder comprising: obtaining, for each reference instance object of an object class in a training set, a digital image of the instance object, and a reference alpha channel defining a segmentation mask of the instance object; and training the autoencoder using said training set to minimize a loss function which comprises, for a reference instance object, a difference between pixels of an alpha channel of a decompressed vector at the output of the autoencoder, and the reference alpha channel defining the segmentation mask of the reference instance object; wherein the loss function is a weighted sum of three terms respectively representative of: a Kullbak-Leibler divergence; differences between pixels of the input and decompressed vector; said difference between pixels of the alpha channel of the decompressed vector at the output of the autoencoder, and the reference alpha channel defining the segmentation mask of the reference instance object.

Advantageously, said differences between pixels of the input and decompressed vector are multiplied by said reference alpha channel.

Advantageously, said training comprises a plurality of training iterations over the training set, and the weight of the term representative of the difference between pixels of the alpha channel of the decompressed vector, and of the reference alpha channel decreases over successive iterations.

Advantageously, said computer-implemented method comprises: scaling down each digital image of the training set, and each corresponding reference alpha channel, to obtain, for each reference instance object of the training set, a plurality digital images, and a plurality of reference alpha channels, in a plurality of respective resolutions; training a plurality of autoencoders using respectively the digital images and reference alpha channels in said plurality of respective resolutions.

Advantageously, the autoencoder is a variational autoencoder.

The invention also discloses a device for training at least one autoencoder, said device comprising at least one processing logic configured for: obtaining, for each reference instance object of an object class in a training set, a digital image of the instance object, and a reference alpha channel defining a segmentation mask of the instance object; training the autoencoder using said training set to minimize a loss function which comprises, for a reference instance object, a difference between pixels of an alpha channel of a decompressed vector at the output of the autoencoder, and the reference alpha channel defining the segmentation mask of the reference instance object, wherein the loss function is a weighted sum of three terms respectively representative of: a Kullbak-Leibler divergence; differences between pixels of the input and decompressed vector; said difference between pixels of the alpha channel of the decompressed vector at the output of the autoencoder, and the reference alpha channel defining the segmentation mask of the reference instance object.

The invention also discloses a computer program product for training at least one autoencoder, said computer program product comprising computer code instructions configured to: obtain, for each reference instance object of an object class in a training set, a digital image of the instance object, and a reference alpha channel defining a segmentation -mask of the instance object; train the autoencoder using said training set to minimize a loss function which comprises, for a reference instance object, a difference between pixels of an alpha channel of a decompressed vector at the output of the autoencoder, and the reference alpha channel defining the segmentation mask of the reference instance object; wherein the loss function is a weighted sum of three terms respectively representative of: a Kullbak-Leibler divergence; differences between pixels of the input and decompressed vector; said difference between pixels of the alpha channel of the decompressed vector at the output of the autoencoder, and the reference alpha channel defining the segmentation mask of the reference instance object.

The invention also discloses a computer-implemented method comprising: obtaining a digital image having at least one color channel; forming an input vector comprising said digital image and an alpha channel; using an autoencoder for encoding the input vector into a compressed vector, and decoding the compressed vector into a decompressed vector; obtaining a segmentation mask for an object in the digital image based on the alpha channel of said decompressed vector; wherein the autoencoder have been trained using a computer-implemented method according to the invention.

The invention also discloses a device comprising at least one processing logic configured for: obtaining a digital image having at least one color channel; forming an input vector comprising said digital image and an alpha channel; using an autoencoder for encoding the input vector into a compressed vector, and decoding the compressed vector into a decompressed vector; obtaining a segmentation mask for an object in the digital image based on the alpha channel of said decompressed vector; wherein the autoencoder have been trained using a computer-implemented method according to the invention.

The invention also discloses a computer program product comprising computer code instructions configured to: obtain a digital image having at least one color channel; form an input vector comprising said digital image and an alpha channel; use an autoencoder for encoding the input vector into a compressed vector, and decoding the compressed vector into a decompressed vector; obtain a segmentation mask for an object in the digital image based on the alpha channel of said decompressed vector; wherein the autoencoder have been trained using a computer-implemented method according to the invention.

BRIEF DESCRIPTION OF THE DRAWINGS

The invention will be better understood and its various features and advantages will emerge from the following description of a number of exemplary embodiments provided for illustration purposes only and its appended figures in which:

- Figure 1 represents a picture of an exemplary device in which the invention can be implemented;
- Figure 2 represents a functional scheme of an exemplary device in which the invention can be implemented;
- Figure 3 discloses an example of segmentation mask in a picture of an instance of a class of objects being affected by defects in prior art systems;
- Figure 4 represents an example of a device in a number of embodiments of the invention;
- Figure 5 represents an example of a computer-implemented method for training an autoencoder in a number of embodiments of the invention;
- Figure 6 represents an example of an autoencoder in a number of embodiments of the invention;
- Figure 7 represents a computer implemented method for using an autoencoder in a number of embodiments of the invention;
- Figure 8 represents an example of a segmentation mask generated by a device or method according to the invention, in a picture of an instance of a class of object being affected by defects.

DETAILED DESCRIPTION OF THE INVENTION

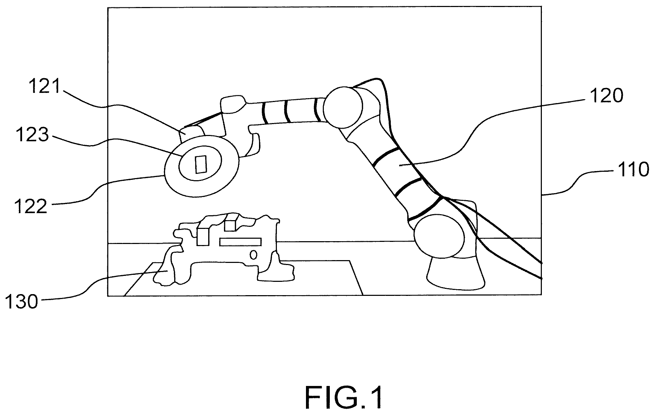

Figure 1 represents a picture of an exemplary device in which the invention can be implemented.

The device consists in a computing device 110 that controls an articulated arm 120. The articulated arm is able to rotate in a number of orientations and directions, in order to move a head 121 around an object 130. The head is provided with LEDs that are able to enlight the object 130 with different light colors and intensities, and a camera 123 which is able to capture pictures of the enlighten object 130. The computing device 110 is also connected to the LEDs and camera to control the lighting, image capture, and receive the captured images. The computing device 110 is therefore able to capture pictures of the object 130 under many different angles of view, and conditions of capture (i.e light, zoom of the camera...).

In a number of embodiments of the invention, the computing device also comprises user interfaces such as input interfaces (mouse, keyboard...) and output interfaces (display, screen...), not shown in the figure 1, to receive commands from the user, and display to the user the pictures captured from the camera, as well as additional information.

In a number of embodiments of the invention, the computing device 110 is configured to use a machine learning engine to generate a segmentation mask of the object 130 in a picture captured by the camera 123, and/or to detect anomalies of the object 130 according to the images captured by the camera 123.

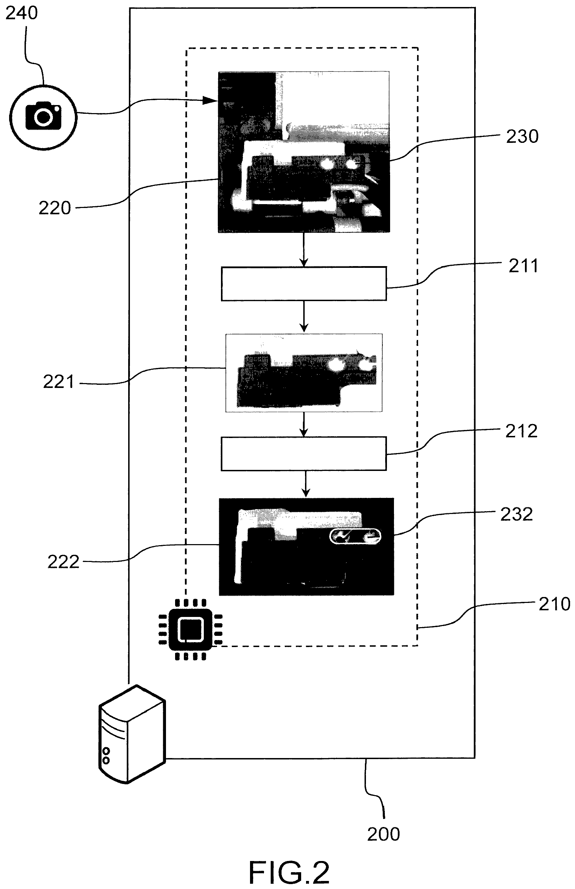

In a number of embodiments of the invention, the computing device 110 may also be configured to enrich a training set of a machine learning engine, and/or train a machine learning engine to generate segmentation masks and/or detect anomalies in pictures of objects similar to the object 130. The figure 2 provides an example of a functional scheme of such a device.

Of course, the exemplary device of figure 1 is not limitative, and the invention may be embedded within many other devices. For example, a computing device of the invention may receive images from a fixed camera.

Figure 2 represents a functional scheme of an exemplary device in which the invention can be implemented.

The device 200 is a computing device intended to perform a detection, localization, and classification of defects in products of an industrial plan. It is therefore intended to be used for quality control of the products at the output of the industrial plant. The device may for example have the physical shape shown by figure 1.

To this effect, the device 200 receives from at least one digital camera 240, for each product to be verified, a digital image 220 of the product. The digital image usually shows the product behind a background of the industrial plant. In the example of figure 2, the product represented in the image 220 have one defect: two spots of grease 230.

The device 200 comprises at least one processing logic 210. According to to various embodiments of the invention, a processing logic may be a processor operating in accordance with software instructions, a hardware configuration of a processor, or a combination thereof. It should be understood that any or all of the functions discussed herein may be implemented in a pure hardware implementation and/or by a processor operating in accordance with software instructions. It should also be understood that any or all software instructions may be stored in a non-transitory computer-readable medium. For the sake of simplicity, in the remaining of the disclosure the one or more processing logic will be called "the processing logic". However, it should be noted that the operations of the invention may also be performed in a single processing logic, or a plurality of processing logics, for example a plurality of processors.

The processing logic 210 is configured to execute a segmentation module 211 which is configured to generate, from the image 220, a segmentation mask 221, that is to say obtain the pixels which actually represent the object. As will be explained in further details below, the determination of the segmentation mask is performed using an autoencoder that generates an alpha channel defining the segmentation mask.

The processing logic 210 is further configured to execute an anomaly detection module 222, which is configured to detect the presence or absence of an anomaly from the mask 221, an anomaly being representative of a defect in the object. The anomaly detection module may be further configured to locate and classify the anomaly. In the example of figure 2, the anomaly detection module 212 shall detect that the image comprises an anomaly, locate this anomaly 232, and classify the anomaly as grease.

The anomaly detection module 212 may rely on a generative machine learning engine, such as a variational autoencoder or a Generative Adversarial Network (GAN). The segmented object is for example encoded and decoded by a variational autoencoder, then a pixel-wise difference is calculated between the input image of the object, and the reconstructed image of the object. Pixels whose pixel-wise difference is above a threshold are considered as dissimilar pixels, and the presence of clusters of dissimilar pixels is tested. A cluster of dissimilar pixel is considered as representing an anomaly.

This error detection provides a number of advantages. It firstly provides an error detection which is precise at a pixel level. The use of a clustering algorithm allows detecting an error if a plurality of dissimilar pixels are present in the same area, but does not require the pixel to be contiguous. Thus, the threshold for deciding that a pixel is a dissimilar one can be fine tuned. In addition, many different types of anomalies can be detected, even anomalies that were not previously encountered in a training set. In addition, this method being able to well discriminate normal from abnormal samples, only a limited supervision of from the user is needed.

In general, a correct segmentation of the object for which anomalies are to be detected is of paramount importance for the correct detection, localization and classification of anomalies, because if the segmentation is not correctly performed, pixels that belong to the object may not be used for the anomaly detection, or conversely background pixels may be taken into account for the detection, and classified as anomalies, thereby leading to an excessive number of false positive detections. The invention overcomes these issues, as will be explained in more details below.

In addition, both the segmentation module 211 and the anomaly detection module 212 may be based on the same autoencoder. This allows combining the training of the two modules, and ensuring the coherence of operations between the two modules. The autoencoder may be a variational autoencoder (VAE) which may use two deep CNNs for respectively encoding and decoding the image. Thus, a single encoding and decoding of each image by the autoencoder is required for both segmenting and detecting anomalies. Moreover, the anomaly detection in module 212 can be performed simply, by evaluating pixel dissimilarities only for pixels that belong to a segmentation mask defined by the alpha channel which has been generated by the autoencoder

The device 200 is provided by means of example only of a device in which the invention may be implemented. This example is however not limitative, and the invention is applicable to a large number of applications for which a correct segmentation of objects is needed. In addition, the exemplary structure of figure 2 is also not limitative. For example, the computations may be performed on a plurality of different devices, some parts of the computations may be performed in a remote server, the images may be obtained from a database of images rather than an instantaneous capture.

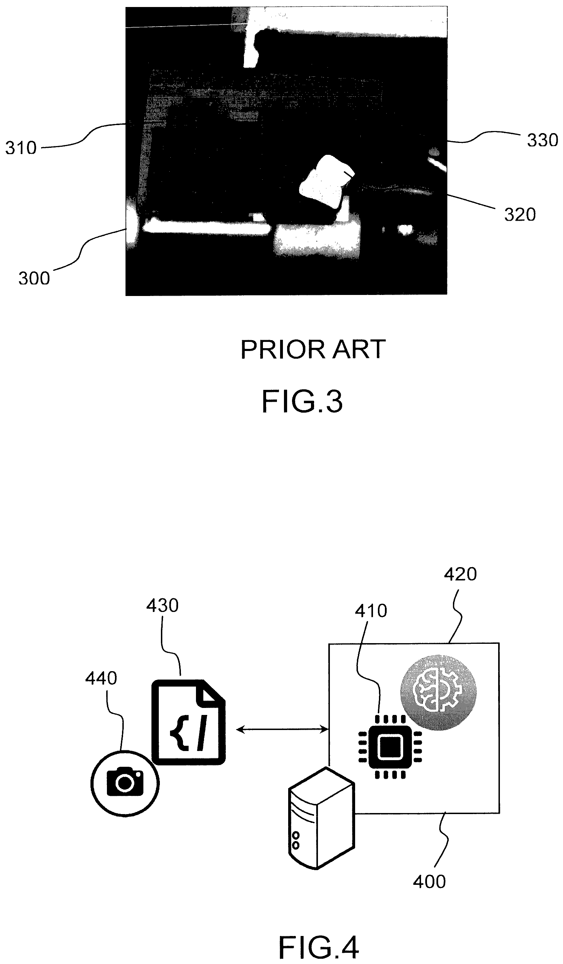

Figure 3 discloses an example of segmentation mask in a picture of an instance of a class of objects being affected by defects in prior art systems.

In the example of figure 3, the picture 300 represents an object 310 that is affected a defect 320, in this example a grease spot.

The segmentation is in this example performed by the algorithm called Yolact which has been briefly described above. The algorithm generates a segmentation mask 330. However the segmentation mask excludes most of the defect 320. This is because the segmentation algorithm has been trained to recognize normal objects. Therefore, the defect 320, which did was not present in the training set of the segmentation algorithm, will for the most part be considered as not belonging to the object.

This situation is very detrimental to applications such as anomaly detection or quality control, since the defect, which is precisely the target of the detection, will not be taken into account. The same problem arises in any application which requires the segmentation of objects that may comprise abnormal features or defects that were not present in the training set of the segmentation algorithm.

Although figure 3 represents the output of a segmentation performed by the algorithm called Yolact, the same issue arises for all prior art instance segmentation algorithms.

Figure 4 represents an example of a device in a number of embodiments of the invention.

The device 400 is a computing device. Although represented in figure 4 as a computer, the device 400 may be any kind of device with computing capabilities such as a server, or a mobile device with computing capabilities such as a smartphone, tablet, laptop, or a computing device specifically tailored to accomplish a dedicated task.

The device 400 comprises at least one processing logic 410.

The processing logic 400 is configured to obtain an input vector representing an input data sample 430 representing a digital image. The digital image may be obtained from a variety of sources. For example, it may be captured by a digital camera 440, or obtained from a database of images.

In a number of embodiments of the invention, the device 400 is intended to perform quality control at the output of an industrial plan. The digital camera is thus placed at the output of the industrial plan, and is configured to capture images of each product at the end of the production line. The device 400 is then configured to segment the object representing product on the image, and detect if the product presents a defect.

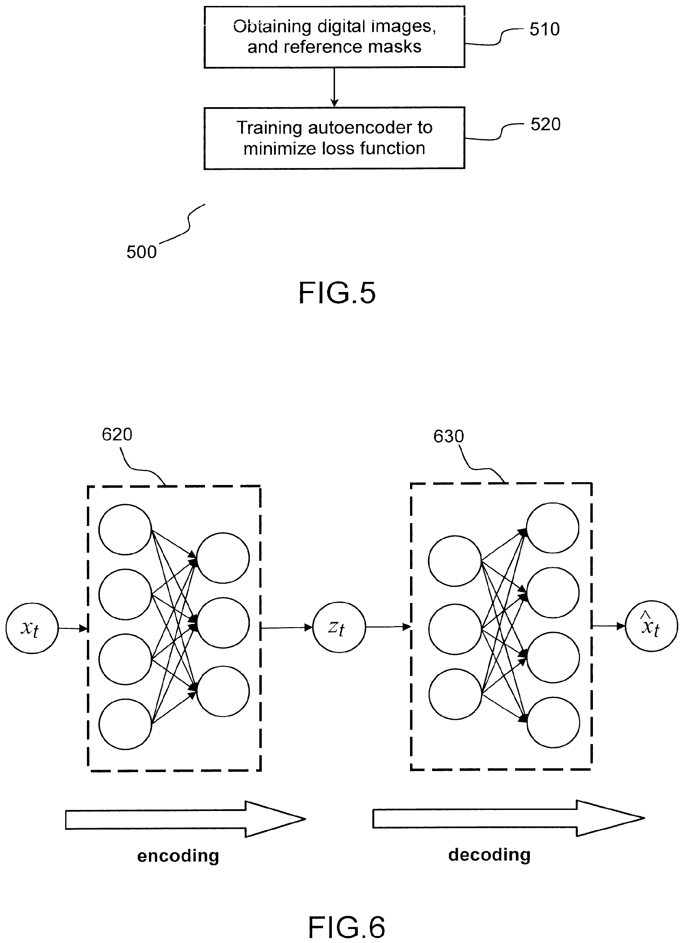

The processing logic 410 is configured to execute an autoencoder 420. An autoencoder is a type of artificial neural network that consists in encoding samples to a representation, or encoding of lower dimension, then decoding the sample into a reconstructed sample, and is described for example in Liou, C. Y., Cheng, W. C., Liou, J. W., & Liou, D. R. (2014). Autoencoder for words. Neurocomputing, 139, 84-96. The principle of autoencoder is described in more details with reference to figure 6.

In general, the device of the invention is intended to generate a segmentation mask of an instance of a class of objects as an alpha channel of the image. That is to say, the alpha channel defines if a pixel belongs to the object of the background. This can be achieved in many different ways. For example, the alpha value can be defined in a scale ranging from 0 (completely transparent) to 1 (completely opaque). Thus, an alpha value of 0 can be set for any pixel deemed to belong to the background, and a value of 1 for each pixel deemed to belong to the object. Of course, this convention is not limitative, and the skilled man could define any convention for the definition of pixels belonging to the object or the background in the alpha channel. The segmentation is advantageously specifically trained for a defined classe of objects. For example, the autoencoder can be trained to generate segmentation masks for any class of objects: cars, spoons, vehicle parts... The class of objects can also be a more precise class, such as a defined product at the output of an industrial plant.

The autoencoder is trained, in a training phase, to generate segmentation masks. To this effect, a training set comprises reference images of instances of objects of a defined class. Each reference image is associated with a reference alpha channel that defines a reference segmentation mask for the instance object in the reference image. These reference segmentation masks can be obtained in different ways. For example, an expert user can define manually the appropriate segmentation mask for each reference image. The reference segmentation masks can also defined in a more efficient way. For example, the applicant has filed a patent application named *"Improved generation of segmentation masks for training a segmentation machine learning engine"* the same day as the present application, that provides an efficient technique for generating reference segmentation masks for a training set of reference images.

During the training phase, the autoencoder is tuned over successive iterations, in order to minimize, aver the whole training set, a loss function.

The loss function comprises, for each reference image, a difference between the alpha channel of the reconstructed vector, and the associated reference alpha channel representing the segmentation mask. Stated otherwise, one of the terms of the loss function of the autoencoder during the training phase consists in taking into account the differences between the alpha channel of the output vector, and the reference alpha channel.

Therefore, the autoencoder learns in the same time, during the training phase, to encode instances of objects belonging to the class, and generating alpha channels that are representative of segmentations masks of the instance of the object. The training phase will be describer in more details with reference to figure 5.

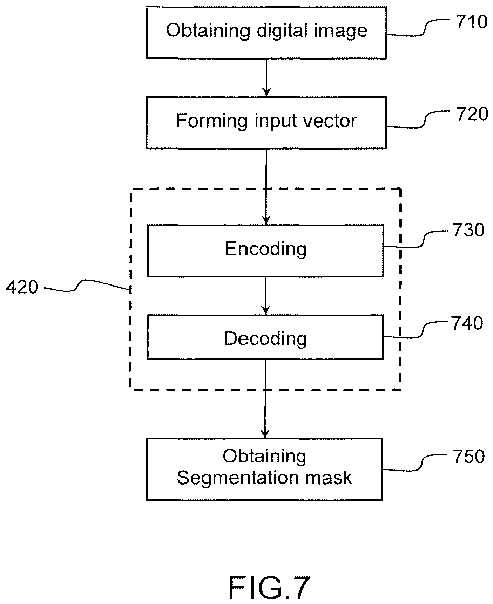

Figure 7 represents a method which is implemented by the one or more processing logic 410.

Figure 5 represents an example of a computer-implemented method for training an autoencoder in a number of embodiments of the invention.

The method 500 comprises a first step 510 of obtaining, for each reference instance object of an object class of a training set, a digital image of the instance object, and a reference alpha channel defining a segmentation mask of the instance object.

The reference images can be obtained in many different ways. For example, if the segmentation is intended to be performed for products at the output of an industrial plant, the reference images can be for example pictures of products of the same type captured at the output of the industrial plan. The images can be obtained in different forms, for example they can be RGB or Grayscale images. As explained with reference to figure 4, the reference alpha channels segmentation masks can be obtained in many different ways, and can for example be defined by expert users.

The method 500 then comprises a training 520 of the autoencoder using the training set to minimize a loss function.

For the training of the autoencoder, an input vector is formed for each digital image of each reference instance object. Each input vector therefore represents the corresponding image. The input vector is thus formed of the components initially present in the image, such as RGB or Grayscale values of pixels. The autoencoder thus encodes the image into a compressed vector. However, at decoding, the autoencoder decodes the compressed vectors into decompressed vectors that comprises, not only the components initially present in the image, but also an additional alpha channel.

During the training phase, input vectors are compressed then decompressed, and a reconstruction loss is calculated based on the decompressed vectors. In general, the training of the autoencoder consists a plurality of iterations of encoding and decoding the images, calculating a loss, and adjusting the parameters of the autoencoder to minimize the loss function.

The loss function comprises a difference between pixels of an alpha channel of the decompressed vectors at the output of the autoencoder, and the corresponding reference alpha channel defining the segmentation mask of the reference instance object. That is to say, the loss function will depend upon the difference between the alpha channel of a decompressed vector at the output of the autoencoder, and the corresponding reference alpha channel representing the segmentation for the same instance objects.

Therefore, during the training phase, the autoencoder will be parameter, for the images of the training set, to minimize the difference between the decompressed alpha channel, and the reference alpha channel that represents the segmentation mask. The autoencoder is thus trained, at the end of the training phase, to generate, from the color or grayscale layers of an image of an instance object of the object class, an alpha channel that defines a segmentation mask of the object.

An autoencoder trained using this method provides very efficient results, for a number of reasons.

As the autoencoder compresses the image into a latent space that defines essential features of the image, the autoencoder is well suited, when trained with images of instance objects of the same object class, to automatically identify the essential features of the object.

Moreover,-as the autoencoder reconstructs the object from the latent space, the autoencoder is robust to anomalies, such as occlusion, or the presence of defects in the object. Thus, the autoencoders of the invention will provide accurate segmentation masks, even when having as input an instance object comprising defects.

Figure 6 represents an example of an autoencoder in a number of embodiments of the invention.

Autoencoders have been described for example in Liou, Cheng-Yuan; Huang, Jau-Chi; Yang, Wen-Chie (2008). "Modeling word perception using the Elman network". Neurocomputing. 71 (16-18), and Liou, Cheng-Yuan; Cheng, Wei-Chen; Liou, Jiun-Wei; Liou, Daw-Ran (2014). "Autoencoder for words". Neurocomputing. 139: 84-96. Autoencoders are a type of neural networks which are trained to perform an efficient data coding in an unsupervised manner.

An autoencoder consists in a first neural network 620, that encodes the input vector $x_t$ into a compressed vector noted $z_t$ (t representing the index of the iteration), and a second neural network 630 that decodes the compressed vector $z_t$ into a decompressed or reconstructed vector $\hat{x}_t$. The compressed vector $z_t$ has a lower dimensionality than the input vector $x_t$ and the reconstructed vector $\hat{x}_t$: It is expressed using a set of variables called latent variables, that are considered to represent essential features of the vector. Therefore, the reconstructed vector $\hat{x}_t$ is similar, but in general not strictly equal to the input vector $x_t$. As explained below, the first neural network 620, and the second neural network 630 are not symmetrical: the input vector $x_t$ represents the color layers of the input image, while the reconstructed (or decompressed) vector $\hat{x}_t$ comprises, in addition, components representative of an alpha channel of the image. Therefore, the autoencoder generates an alpha channel from the color components of the image. According to various embodiments of the invention, each of the first neural network 620, and the second neural network 630 is a deep Convolutional Neural Network (CNN). Indeed, the deep CNNs are known as being very efficient for image processing.

It is possible, at the output of the decoding, to compute both a reconstruction error, or loss function, and a gradient of the loss function.

As said before, for training the autoencoder, a plurality of iterations are performed, each comprising the encoding and decoding of samples of the training set, the calculation of a loss function, and the adaptation of the autoencoder to minimize the lost function. By doing so, the latent variables of the compressed vectors p are trained to represent the salient high-level features of the training set. Stated otherwise, the training phase of the auto-encoder provides an unsupervised learning of compressing the training samples into a low number of latent variables that best represent them.

In general, the encoding and decoding is called the forward pass, the adaptation of the autoencoder, which consists notably in adapting the weight and biases of the neural network depending on the gradient of the loss function, is called the backward pass, and a complete forward and backward pass for all the training samples is called an epoch.

The loss function is noted $L(x_t, \hat{x}_t)$. The gradient of the loss function can be noted $\nabla_{x_t} L$.

In a number of embodiments of the invention, the autoencoder is a variational autoencoder (VAE). The variational autoencoders are described for example by Kingma,, D. P., & Welling, M. (2013). Auto-encoding variational bayes. arXiv preprint arXiv:1312.6114, or Diederik P. Kingma and Volodymyr Kuleshov. Stochastic Gradient Variational Bayes and the Variational Autoencoder. In ICLR, pp. 1-4, 2014. The variational auto-encoder advantageously provides a very good discrimination of normal and abnormal samples on certain datasets. The invention is however not restricted to this type of autoencoder, and other types of autoencoder may be used in the course of the invention.

According to various embodiments of the invention, the loss function is a weighted sum of one or more of the following terms:

- a Kullbak-Leibler (KL) divergence;
- a difference between pixels of the input and reconstructed vector;
- a difference between pixels of an alpha channel of a decompressed vector at the output of the autoencoder, and the reference alpha channel defining the segmentation mask of the reference instance object.

The KL difference represents the divergence of the compressed samples. The minimization of this term ensures that the latent space has a Gaussian distribution, and thus optimizes the probability that a relevant latent space has been found. This term thus ensures that the latent space is as close as possible to an optimal Gaussian distribution.

The difference between pixels of the input and reconstructed vector ensures that the instance objects in the decompressed vectors look as similar as possible to the instance objects in the input vectors, and thus that the latent space provides a good representation of the objects to segment. According to various embodiments of the invention, this term can be expressed in different ways. For example a difference with corresponding pixels can be calculated, for example using a quadratic function of the pixel differences. For example, the pixel differences can be calculated as:

$$ L(x_t, \hat{x}_t) = \|x_t - \hat{x}_t\|^2 . alpha - D_{KL}\big(q(z_t|x_t), p(z_t)\big). $$

$$ (Equation\ 1) $$

Wherein the term alpha represents the values alpha channel, which means that the quadratic error $\|x_t - \hat{x}_t\|^2$ is taken into account only for pixels that are considered as belonging to the segmentation mask. During the training phase, wherein the reference alpha channel is known, the term alpha represents the ground truth (reference alpha channel), while, during inference, the term alpha is the decompressed alpha channel.

According to various embodiments of the invention. The pixels differences can be calculated on one or more color layers. For example, pixel differences can be calculated on RGB layers, grayscale layer, or the Y layer of an YCbCr or YUV color space. The pixel differences can also be integrated within an image difference metric, such as a PSNR (Peak Singal to Noise Ratio), or a SSIM (Structural SIMilarity).

In a number of embodiments of the invention, the pixel differences are multiplied pixel wise by the reference alpha channel. That is to say, only the reconstruction differences of pixels that actually belong to the reference instance object are taken into account. This allows this term of the loss function to represent only the reconstruction error of the object, and not reconstruction error of the background. Thus, the neural networks are trained, through the minimization of the instance function that comprises a term representative of pixel-wise reconstruction error for the instance objects only, to provide a more efficient representation of the objects.

Furthermore, training the autoencoder to efficiently compress and decompress instance objects of the class allow using the autoencoders not only for object segmentation, but also for a subsequent application. For example, if the segmentation is used for anomaly detection, as in the example of figure 2, and if the anomaly detection itself relies on auto-encoding of images representing objects, the autoencoder can be used for both object segmentation, and anomaly detection. Therefore, a single training phase of the auto-encoder is needed for the whole application. This reduces the computation needs for the training phase.

As noted above, the term representative of a difference between the alpha channel of a decompressed vector at the output of the autoencoder, and the reference alpha channel defining the segmentation mask of the reference instance object allows the autoencoder to learn how to generate a segmentation mask for instance objects of the same class, from the color pixels of the image that represent the objects. This difference can for example be calculated as:

$$L = \left\| alpha_t - \hat{alpha}_t \right\|^2$$

*(Equation 2)*

Wherein $alpha_t$ represents the reference alpha channel, and $\hat{alpha}_t$ the alpha channel of the reconstructed vector.

The loss function can therefore be expressed as:

$$L(x_t, \hat{x}_t) = \left\| x_t - \hat{x}_t \right\|^2 . alpha - D_{KL}\big(q(z_t | x_t), p(z_t)\big) + Lambda. \left\| alpha_t - \hat{alpha}_t \right\|^2.$$

*(Equation 3)*

Wherein $alpha_t$ represents the reference alpha channel, $\hat{alpha}_t$ the alpha channel of the reconstructed vector, and *Lambda* is a hyperparameter that defines the relative weighting of the alpha channel difference compared to the other terms of the loss.

In a number of embodiments of the invention, the weighting factor Lambda varies over successive learning iterations (or epochs). For example, the relative weighting factors of the KL divergence and of the difference between pixels of the input and reconstructed vector may be equal to zero, or more generally have a relative lower weight during the first iterations (conversely, the relative weight of the alpha channel difference $\|alpha_t - \hat{alpha}_t\|^2$ is higher during the first iterations).

This allows the first iterations to adapt the weight and biases of the neural networks 620, 630 only, or mainly, to generate correct segmentation masks. Afterwards, for successive iterations, weighting factors are set so that the three terms of the loss function are optimized simultaneously. This allows first learning to the neural networks a general solution to generate segmentation masks, then refining the solution to generate even better segmentation masks, efficiently representing the objects and having a good distribution of the solution. This concept, called curriculum learning, avoids converging to a solution in a completely wrong region of the solution space. In the present case, this avoids converging to solutions wherein the objects are well represented, and the distribution is very good, but all pixels of the alpha channel are set to zero, and the generation of segmentation masks does not work.

More generally, the weighting coefficient Lambda of the differences between the decompressed and reference alpha channels can be set to a high value for the first iterations, and decrease over successive iterations, so that the neural networks first learn to generate correct segmentation masks, then learn in the same time to refine the segmentation masks, provide a better representation of objects and use a better distribution in the latent space.

In a number of embodiments of the invention, the training is performed in parallel in a plurality of resolutions. For example, if the native resolution of the input images is 1920x1080, the input images can be scaled down to 960x 600 and 480x300. The reference alpha channel defining the segmentation mask can be scaled down accordingly, so that three autoencoders, corresponding to 3 different resolutions, can be trained in parallel, using the same training set This example of resolutions is of course not limitative: more generally, two or more autoencoders can be trained in parallel, by scaling down the input images and the reference alpha channels to obtain input images and segmentation masks on two or more resolutions, and the resolutions can be defined according to both the native resolution of the input image, and the size of details targeted.

This allows being able to perform an efficient segmentation on different resolutions. This can be useful for certain applications that rely on instance object segmentation. For example, in applications relative to anomaly detection, the different resolutions may allow detecting anomalies of different sizes: while a high resolution is efficient to detect small defects, it may not be efficient at detecting large ones, and conversely. The segmentation of objects on a plurality of resolutions therefore allows performing a segmentation for different resolutions and improve the output of an application based on the segmentation masks. The size of the latent space (i.e of the compressed vectors $z_t$) can also be adapted according to a target resolution. For example, the applicant noticed that, in an anomaly detection application, the autoencoder is best suited to detect anomalies whose size is about a quarter of the spatial receptive field of the latent variables in the latent space.

Figure 7 represents a computer implemented method for using an autoencoder in a number of embodiments of the invention.

The method 700 comprises a first step 710 of obtaining a digital image having at least one color channel. As explained with reference to figure 4, the images may be obtained in many different ways. They may for example be captured by a camera, retrieved from a database, received through a communication channel, etc. and the digital image can have various forms, such as a RGB or a Grayscale image.

The method 700 further comprises a second step 720 of forming an input vector comprising said digital image.

The method 700 further comprises a third and fourth steps of using an autoencoder 420 for encoding 730 the input vector into a compressed vector, and decoding 740 the compressed vector into a reconstructed vector comprising, in addition to the color channels of the input image, an alpha channel.

The autoencoder 420 have been trained according to a method in an embodiment of the invention, for example one of the embodiments described with reference to figure 5. As the autoencoder is trained to generate segmentation masks for objects in the image, the alpha channel of the reconstructed vector will define a segmentation mask for an object in the digital image.

Advantageously, the training set used for training the autoencoder comprised objects of the same class than the object for which a segmentation needs to be obtained, and corresponding reference alpha channels defining segmentation masks. For example, if the method 700 is intended to generate a segmentation mask for a certain kind of perfume bottle at the end of a production line, the autoencoder may advantageously have been trained with pictures of the same kind of perfume bottle, each image being associated with a reference alpha channel defining a segmentation mask for the perfume bottle in the image. The same principle can be used for generating a segmentation mask adapted for any kind of object or product.

Finally, the method 700 comprises a fifth step 750 of obtaining a segmentation mask for an object in the digital image based on the alpha channel of said reconstructed vector. This can be done in a straightforward manner, depending upon the convention that has been used for the alpha channel. For example, if an alpha value equal to 1 means that a pixel belongs to the object, and an alpha value equal to 0 that a pixel belongs to the background, a segmentation mask of the object can be obtained directly from the reconstructed alpha channel.

As said before, the method 700 allows generating accurate segmentation masks for defined types of objects, even if the object is affected by defects or anomalies that were not encountered in the training set. The method 700 is also robust to occlusion, and variations in the background of the object.

In addition, the method provides the advantage of ensuring that the computation time and resources to generate the segmentation mask are bounded, in any situation.

Furthermore, the output of the autoencoder can be used not only to generate a segmentation mask, but also for subsequent uses, such as anomaly detection.

All the embodiments discussed with reference to figure 5 can be adapted to the method 700. For example, the input image can be scaled down, and alpha channels added in a plurality of resolutions, and the input images, and corresponding alpha channels can be sent in parallel, in more than one resolution, to a plurality of autoencoder respectively trained to generate segmentation masks in a plurality of resolutions.

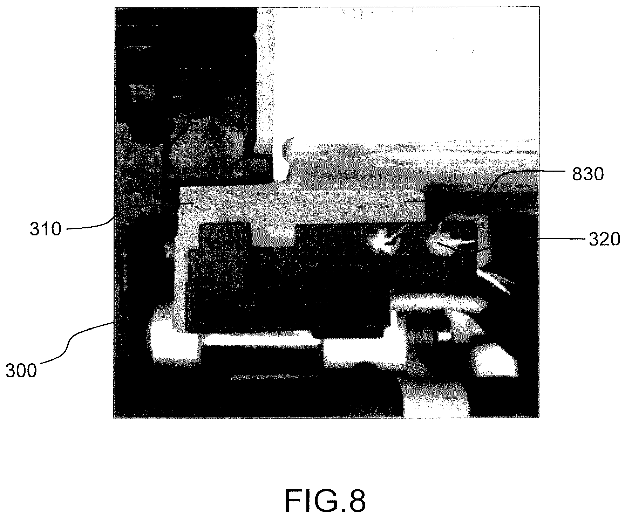

Figure 8 represents an example of a segmentation mask generated by a device or method according to the invention, in a picture of an instance of a class of object being affected by defects.

The picture 300 represents an object 310 similar to the one that is represented in figure 3, which is affected a defect 320, in this example a grease spot. However, in this example, the method according to the invention has generated a mask 830, which segments much more accurately the object 310 from the background than the segmentation mask 330 of the prior art. More specifically, the mask 830 well defines the general shape of the object 310, and does not exclude from the object the pixels representing the defects 320.

This example demonstrates that the invention allows generating segmentation masks that are much more accurate than those of the prior art, especially for objects affected by defects or anomalies.

The examples described above are given as non-limitative illustrations of embodiments of the invention. They do not in any way limit the scope of the invention which is defined by the following claims.

**Claims**

1. A computer-implemented method (500) for training at least one autoencoder (420) comprising:

  - obtaining (510), for each reference instance object of an object class in a training set, a digital image of the instance object, and a reference alpha channel defining a segmentation mask of the instance object; and

training (520) the autoencoder using said training set to minimize a loss function which comprises, for a reference instance object, a difference between pixels of an alpha channel of a decompressed vector at the output of the autoencoder, and the reference alpha channel defining the segmentation mask of the reference instance object;

wherein the loss function is a weighted sum of three terms respectively representative of:

- a Kullbak-Leibler (KL) divergence;
- differences between pixels of the input and decompressed vector;
- said difference between pixels of the alpha channel of the decompressed vector at the output of the autoencoder, and the reference alpha channel defining the segmentation mask of the reference instance object.

2. The computer-implemented method of claim 1, wherein said differences between pixels of the input and decompressed vector are multiplied by said reference alpha channel.

3. The computer-implemented method of one of claims 1 to 2, wherein said training comprises a plurality of training iterations over the training set, and the weight of the term representative of the difference between pixels of the alpha channel of the decompressed vector, and of the reference alpha channel decreases over successive iterations.

4. The computer-implemented method of one of claims 1 to 3, comprising:

- scaling down each digital image of the training set, and each corresponding reference alpha channel, to obtain, for each reference instance object of the training set, a plurality digital images, and a plurality of reference alpha channels, in a plurality of respective resolutions;
- training a plurality of autoencoders using respectively the digital images and reference alpha channels in said plurality of respective resolutions.

5. The computer-implemented method of one of claims 1 to 4, wherein the autoencoder is a variational autoencoder.

6. A device for training at least one autoencoder, said device comprising at least one processing logic configured for:

- obtaining (510), for each reference instance object of an object class in a training set, a digital image of the instance object, and a reference alpha channel defining a segmentation mask of the instance object;
- training (520) the autoencoder using said training set to minimize a loss function which comprises, for a reference instance object, a difference between pixels of an alpha channel of a decompressed vector at the output of the autoencoder, and the reference alpha channel defining the segmentation mask of the reference instance object,

wherein the loss function is a weighted sum of three terms respectively representative of:

- a Kullbak-Leibler (KL) divergence;
- differences between pixels of the input and decompressed vector;
- said difference between pixels of the alpha channel of the decompressed vector at the output of the autoencoder, and the reference alpha channel defining the segmentation mask of the reference instance object.

7. A computer program product for training at least one autoencoder, said computer program product comprising computer code instructions configured to:

- obtain (510), for each reference instance object of an object class in a training set, a digital image of the instance object, and a reference alpha channel defining a segmentation mask of the instance object;
- train (520) the autoencoder using said training set to minimize a loss function which comprises, for a reference instance object, a difference between pixels of an alpha channel of a decompressed vector at the output of the autoencoder, and the reference alpha channel defining the segmentation mask of the reference instance object;

wherein the loss function is a weighted sum of three terms respectively representative of:

- a Kullbak-Leibler (KL) divergence;
- differences between pixels of the input and decompressed vector;

- said difference between pixels of the alpha channel of the decompressed vector at the output of the autoencoder, and the reference alpha channel defining the segmentation mask of the reference instance object.

8. A computer-implemented method (700) comprising:

- obtaining (710) a digital image having at least one color channel;
- forming (720) an input vector comprising said digital image and an alpha channel;
- using an autoencoder (420) for encoding (730) the input vector into a compressed vector, and decoding (740) the compressed vector into a decompressed vector;
- obtaining (750) a segmentation mask for an object in the digital image based on the alpha channel of said decompressed vector;

wherein the autoencoder have been trained using a computer-implemented method according to one of the claims 1 to 5.

9. A device (400) comprising at least one processing logic (410) configured for:

- obtaining (710) a digital image having at least one color channel;
- forming (720) an input vector comprising said digital image and an alpha channel;
- using an autoencoder (420) for encoding (730) the input vector into a compressed vector, and decoding (740) the compressed vector into a decompressed vector;
- obtaining (750) a segmentation mask for an object in the digital image based on the alpha channel of said decompressed vector;

wherein the autoencoder have been trained using a computer-implemented method according to one of the claims 1 to 5.

10. A computer program product comprising computer code instructions configured to:

- obtain (710) a digital image having at least one color channel;
- form (720) an input vector comprising said digital image and an alpha channel;
- use an autoencoder (420) for encoding (730) the input vector into a compressed vector, and decoding (740) the compressed vector into a decompressed vector;
- obtain (750) a segmentation mask for an object in the digital image based on the alpha channel of said decompressed vector;

wherein the autoencoder have been trained using a computer-implemented method according to one of the claims 1 to 5.

FIG.1

FIG.2

310

330

320

300

PRIOR ART

FIG.3

420

430

410

440

400

FIG.4

FIG.5

encoding                    decoding

FIG.6

```
Obtaining digital image                    710

            ↓

Forming input vector                       720

            ↓

┌ ─ ─ ─ ─ ─ ─ ─ ─ ─ ─ ─ ─ ─ ─ ┐
│            ↓                 │
│      Encoding          │     730
│                        │
420 │          ↓              │
│      Decoding          │     740
│                        │
└ ─ ─ ─ ─ ─ ─ ─│─ ─ ─ ─ ─ ─ ┘
            ↓

Obtaining
Segmentation mask                          750
```

# FIG.7

FIG.8

Europäisches
Patentamt

European
Patent Office

Office européen
des brevets

# EUROPEAN SEARCH REPORT

Application Number

EP 20 31 5061

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2019/287230 A1 (LU SHAOYU [US] ET AL) 19 September 2019 (2019-09-19) * paragraph [0006] - paragraph [0015] * * paragraph [0029] * * paragraph [0051] - paragraph [0054] * * paragraph [0062] * * paragraph [0073] - paragraph [0075] * * paragraph [0083] * * figures 2, 8, 10 * * equations 3-4 * | 1-10 | INV. G06K9/46 G06K9/62 |
| Y | US 2019/051048 A1 (ZHOU KUN [CN] ET AL) 14 February 2019 (2019-02-14) * paragraph [0027] * | 1-10 | |
| Y | US 2019/236394 A1 (PRICE BRIAN [US] ET AL) 1 August 2019 (2019-08-01) * paragraph [0143] * * paragraph [0154] * | 3 | |
| A | US 2018/174052 A1 (RIPPEL OREN [US] ET AL) 21 June 2018 (2018-06-21) * paragraph [0073] * * figure 7 * | 4 | TECHNICAL FIELDS SEARCHED (IPC) G06K |

The present search report has been drawn up for all claims

| Place of search | Date of completion of the search | Examiner |
|---|---|---|
| The Hague | 8 September 2020 | De Coi, Juri |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 31 5061

This annex lists the patent family members relating to the patent documents cited in the above-mentioned European search report.
The members are as contained in the European Patent Office EDP file on
The European Patent Office is in no way liable for these particulars which are merely given for the purpose of information.

08-09-2020

| Patent document cited in search report | | Publication date | Patent family member(s) | | Publication date |
|---|---|---|---|---|---|
| US 2019287230 | A1 | 19-09-2019 | TW | 201946089 A | 01-12-2019 |
| | | | US | 2019287230 A1 | 19-09-2019 |
| | | | WO | 2019182922 A1 | 26-09-2019 |
| US 2019051048 | A1 | 14-02-2019 | US | 2019051048 A1 | 14-02-2019 |
| | | | WO | 2017181332 A1 | 26-10-2017 |
| US 2019236394 | A1 | 01-08-2019 | NONE | | |
| US 2018174052 | A1 | 21-06-2018 | US | 2018173994 A1 | 21-06-2018 |
| | | | US | 2018174047 A1 | 21-06-2018 |
| | | | US | 2018174052 A1 | 21-06-2018 |
| | | | US | 2018174275 A1 | 21-06-2018 |
| | | | US | 2018176570 A1 | 21-06-2018 |
| | | | US | 2018176576 A1 | 21-06-2018 |
| | | | US | 2018176578 A1 | 21-06-2018 |
| | | | US | 2019266490 A1 | 29-08-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MCLACHLAN, G. J. ; BASFORD, K. E.** Mixture models: Inference and applications to clustering. M. Dekker, 1988, vol. 38
- **ROTHER, C. ; KOLMOGOROV, V. ; BLAKE, A.** GrabCut'' interactive foreground extraction using iterated graph cuts. *ACM transactions on graphics (TOG),* 2004, vol. 23 (3), 309-314
- **LOWE, D. G.** Object recognition from local scale-invariant features. *Proceedings of the seventh IEEE international conference on computer vision,* September 1999, vol. 2, 1150-1157
- **ESLAMI, S. A. ; HEESS, N. ; WEBER, T. ; TASSA, Y. ; SZEPESVARI, D. ; HINTON, G. E.** Attend, infer, repeat: Fast scene understanding with generative models. *Advances in Neural Information Processing Systems,* 2016, 3225-3233
- **BURGESS, C. P. ; MATTHEY, L. ; WATTERS, N. ; KABRA, R. ; HIGGINS, I. ; BOTVINICK, M. ; LERCHNER, A.** Monet: Unsupervised scene decomposition and representation. *arXiv,* 2019
- **HE, K. ; GKIOXARI, G. ; DOLLÁR, P. ; GIRSHICK, R.** Mask r-cnn. *Proceedings of the IEEE international conference on computer vision,* 2017, 2961-2969
- **BOLYA, D. ; ZHOU, C. ; XIAO, F. ; LEE, Y. J.** YOLACT: real-time instance segmentation. *Proceedings of the IEEE International Conference on Computer Vision,* 2019, 9157-9166
- **LIOU, C. Y. ; CHENG, W. C. ; LIOU, J. W. ; LIOU, D. R.** Autoencoder for words. *Neurocomputing,* 2014, vol. 139, 84-6
- **LIOU, CHENG-YUAN ; HUANG, JAU-CHI ; YANG, WEN-CHIE.** Modeling word perception using the Elman network. *Neurocomputing,* 2008, vol. 71, 16-18
- **LIOU, CHENG-YUAN ; CHENG, WEI-CHEN ; LIOU, JIUN-WEI ; LIOU, DAW-RAN.** Autoencoder for words. *Neurocomputing,* 2014, vol. 139, 84-96
- **KINGMA,, D. P. ; WELLING, M.** Auto-encoding variational bayes. *arXiv,* 2013
- **DIEDERIK P.** Kingma and Volodymyr Kuleshov. Stochastic Gradient Variational Bayes and the Variational Autoencoder. *ICLR,* 2014, 1-4